# EUROPÄISCHE PATENTSCHRIFT

(11) **EP 2 602 777 B1**
(45) Veröffentlichungstag und Bekanntmachung des Hinweises auf die Patenterteilung: **27.11.2013**
(21) Anmeldenummer: 11191926.2
(22) Anmeldetag: 05.12.2011
(51) Int. Cl.: G08G 1/14, G08G 1/01, G01C 21/34, G08G 1/0968

(54) **Verfahren zum Leiten eines Fahrzeugführers bei der Parkplatzsuche**
Method for guiding a vehicle driver searching for a parking space
Procédé pour guider un conducteur de véhicule à la recherche d'un parking

(43) Veröffentlichungstag der Anmeldung: 12.06.2013
(60) Teilanmeldung: 13184523.2
(73) Patentinhaber: Skobbler GmbH, 10117 Berlin (DE)
(72) Erfinder: Kandal, Philipp, 88069 Tettnang (DE)
(74) Vertreter: Raffay & Fleck

(56) Entgegenhaltungen:
- EP-A1- 1 775 690
- EP-A2- 2 043 071
- WO-A1-2010/081545
- DE-A1-102005 022 171
- US-A1- 2008 048 885

## Beschreibung

Die vorliegende Erfindung betrifft ein Verfahren zum Leiten eines Nutzers eines funkortungsgestützten, insbesondere satellitenfunkortungsgestützten, Navigationsgerätes entlang einer Route zur Parkplatzsuche im Bereich eines Fahrziels.

Funkortungsgestützte, insbesondere satellitenfunkortungsgestützte Navigation ist seit langem bekannt. Sie dient insbesondere Kraftfahrzeugführern zur Orientierung entlang einer Strecke zu einem gewünschten Fahrziel. Derartige Navigationsverfahren basieren auf satellitengestützter Funkortung, heute dem sogenannten GPS-System. Moderne Navigationsgeräte enthalten digitale Kartendaten, auf die sie zurückgreifen, um entsprechende Fahrrouten zu planen. Die Planung erfolgt dabei typischerweise aufgrund der Eingabe einer Zieladresse bzw. eines Zielpunktes, zu dem ausgehend von der aktuellen Position (der Startposition) das Navigationsgerät die optimale Route berechnet.

Navigationsgeräte gibt es dabei in der vielfältigsten Ausprägung. So sind stationär in Kraftfahrzeugen verbaute bordeigene Navigationsgeräte ebenso bekannt, wie mobile Geräte. Bei den mobilen Geräten gibt es solche, die ausschließlich als Navigationsgerät fungieren. Aktuell erfreuen sich aber auch Multifunktionsgeräte wie etwa Smartphones oder Tablet-PC's großer Beliebtheit und können durch Aufspielen einer entsprechenden Anwendungssoftware mit einer Navigationsfunktion ausgestattet und somit als Navigationsgeräte verwendet werden. Denn in vielen dieser mobilen Multifunktionsgeräte sind bereits heute Satellitennavigationsempfänger (GPS-Empfänger) installiert, womit diese Geräte über die wesentliche Hardware-Voraussetzung zur Verwendung als Navigationsgerät verfügen. Einzelne Anbieter haben sich insoweit darauf spezialisiert, Applikationssoftware für derartige Geräte anzubieten, die digitale Kartendaten zur Verfügung stellt, Routenberechnungsroutinen und sonstige Funktionalitäten eines Navigationsgerätes bereitstellt und damit das mobile Endgerät zum Navigationsgerät aufrüstet.

Neben der reinen Routenführung von einem Start- zu einem Zielpunkt bieten moderne Navigationsgeräte weitere Funktionen, wie etwa das zur Verfügung Stellen von Informationen über sogenannte Points of Interest, POI, z.B. Sehenswürdigkeiten, Museen, öffentliche Plätze oder dgl. Auch sind dynamische Routenführungen bekannt, in denen Verkehrssituationen entlang der geplanten Route und Streckenführung berücksichtigt werden, wie z.B. Staus. Die Informationen über derartige Staus erhalten Navigationsgeräte teilweise über entsprechend codiert gesendete Signale von Radiostationen mit Verkehrsmeldungen oder aber auch durch Auswertung von Bewegungsdaten von weiteren Nutzern solcher Navigationsgeräte. Wenn sich die Bewegung der Nutzer erheblich verlangsamt, insgesamt ins Stocken gerät, so wird von dem Anbieter eines Navigationssystems, der diese Bewegungsprofile seiner Nutzer abfragt, auf einen Stau bzw. stockenden Verkehr im Bereich dieser Strecke bzw. des Streckenabschnittes, in dem diese Veränderung des Bewegungsprofils seiner Nutzer auftritt, geschlossen und eine entsprechende Staumeldung an die Navigationsgeräte ausgegeben.

All diese genannten Funktionen dienen der Leitung eines Nutzers von einem Ausgangs- zu einem Zielpunkt.

Dabei ist bekannt, dass ein Großteil der Fahrzeit eines Kraftfahrzeugführers darauf verwandt wird, an seinem Reiseziel einen Parkplatz zu suchen. In großen Städten parken die meisten Kraftfahrzeugführer ihre Kraftfahrzeuge am Straßenrand und kreisen somit, einmal am Fahrziel angekommen, ungeleitet solange um dieses Fahrziel herum durch die anliegenden Straßen, bis sie einen entsprechenden Parkplatz am Straßenrand gefunden haben. Hierbei geht nicht nur wertvolle Zeit verloren, es kommt insbesondere dann, wenn die Kraftfahrzeugführer in Bereichen mit geringer Parkplatzdichte wiederholt ihre Schleifen ziehen, zu einem erhöhten Verkehrsaufkommen, welches im schlimmsten Fall zu Stauungen oder Stockungen führen kann.

Bereits heute gibt es Navigationsgeräte bzw. -systeme, die für den Nutzer eine Möglichkeit zum geführten Aufsuchen eines Parkplatzes bieten. Diese Navigationsgeräte bzw. -systeme beschränken sich in der Regel jedoch darauf, den Nutzer zu einem kostenpflichtigen Parkplatz, z.B. einem Parkhaus, zu leiten, in welchem freie Stellplätze vorhanden sind. Im Bereich von z.B. Innenstädten oder dgl., wo entsprechende Parkmöglichkeiten gegeben sind, mag diese Art der Zielführung ja noch sinnvoll und erfolgversprechend sein. Im Bereich von z.B. Wohngebieten, in denen typischerweise keine kostenpflichtigen Parkplätze bzw. Parkhäuser vorhanden sind, hilft ein entsprechendes System indes nicht weiter.

Aus der WO 2010/081545 A1 ist ein Verfahren bekannt, mit dem die Wahrscheinlichkeit, an einem bestimmten Streckenabschnitt einen Parkplatz zu finden, ermittelt wird. Ein Verfahren zu Routenführung basierend auf einer ermittelten Wahrscheinlichkeit ist nicht offenbart, allerdings aus der EP 1 775690 A1 bekannt.

Auch die US 2008/0048885 A1 beschäftigt sich nur mit der Bestimmung der Wahrscheinlichkeit, einen leeren Parkplatz zu finden, ohne sich mit einer möglichen Routenführung näher zu befassen.

Hier setzen die Erfinder mit der Erfindung an und haben es sich zur Aufgabe gemacht, ein neuartiges Verfahren zum Leiten eines Nutzers eines funkortungsgestützten, insbesondere satellitenfunkortungsgestützten, Navigationsgerätes während der Parkplatzsuche anzugeben.

Diese Aufgabe wird gelöst durch ein gezielt für die Parkplatzsuche optimiertes Verfahren zum Leiten eines Nutzers eines funkortungsgestützten, insbesondere satellitenfunkortungsgestützten Navigationsgerätes entlang einer Route mit den Merkmalen des Patentanspruchs 1. Erfindungsgemäß wird in dem Navigationsgerät dabei eine Endlosroute entlang eines Streckenplans um das Fahrziel herum berechnet, und der Nutzer wird entlang dieser Route solange geführt, bis er einen Parkplatz gefunden hat. Insoweit weicht diese Art der Routenberechnung und Routenführung von der klassischen Berechnung der Route und Führung, wie sie zum Führen eines Nutzers zu einem Fahrziel eingesetzt wird, ab. Denn dort wird eine lineare Routenführung vorgenommen und eine entsprechende Routenberechnung unternommen, die den Nutzer von einem Startpunkt zu einem Zielpunkt führt. Bei der Parkplatzsuche gibt es indes keinen Zielpunkt, der etwa bekannt wäre. Das Ziel ist der Parkplatz, wobei für das Navigationssystem nicht ersichtlich ist, wo dieser zu finden ist. Das Navigationssystem erkennt bei diesem Verfahren erfindungsgemäß lediglich Wahrscheinlichkeiten, an einem Routenabschnitt, der einem Wegabschnitt in natura entspricht, innerhalb einer bestimmten Zeitspanne einen Parkplatz zu finden und kann seine Routenberechnung darauf stützen bzw. diese Wahrscheinlichkeiten mit einbeziehen.

Die einzelnen Routenabschnitte, aus der das Navigationsgerät sequenziell aufeinanderfolgend die Endlosroute aufbaut, werden in ihrer Rangigkeit, d.h. ihrer Position im zeitlichen Ablauf der Route erfindungsgemäß nach den Kriterien
i) Entfernung des jeweiligen Routenabschnittes vom Fahrziel; und
ii) Wahrscheinlichkeit, an dem jeweiligen Routenabschnitt innerhalb einer bestimmten Zeitspanne einen Parkplatz zu finden,
ermittelt. Dabei erfolgt eine Gewichtung der Relevanz der jeweiligen Kriterien i) und ii), anhand derer dann die einzelnen Routenabschnitte zu der Endlosroute aneinandergereiht werden.

Diese Relevanzgewichtung kann insbesondere so erfolgen, dass zunächst Routenabschnitte verwendet und eingefügt werden, die in der Nähe zum Fahrziel liegen, insbesondere unmittelbar daran angrenzen, anschließend weiter entfernte Routenabschnitte bevorzugt werden, die eine hohe Wahrscheinlichkeit haben, innerhalb einer vorgegebenen Zeit dort einen Parkplatz zu finden, erst danach solche, bei denen die Wahrscheinlichkeit geringer wird. Dabei wird ein Algorithmus für die Routenplanung zu wählen sein, der einen Kompromiss zwischen Fahrzeit bei der Parkplatzsuche (also Wahrscheinlichkeit des Auffindens eines Parkplatzes an dem Routenabschnitt) und Entfernung vom Zielort (also von dem Parkplatz letztlich zu dem Zielort zurückzulegende Laufstrecke) bietet.

Diese Wahrscheinlichkeit kann mit einem Verfahren zum Ermitteln der Wahrscheinlichkeit, an einem vorgegebenen Wegabschnitt eines eine Mehrzahl von Wegabschnitten aufweisenden Gebietes innerhalb einer bestimmten Zeitspanne einen Parkplatz zu finden ermittelt werden, bei demauf Bewegungsprofile von Nutzern funkortungsgestützter, insbesondere satellitenfunkortungsgestützter, Navigationsgeräte in dem Gebiet zurückgegriffen wird. Diese Bewegungsprofile können sehr leicht aufgenommen werden, indem z.B. ein bestimmtes Navigationsgerät anhand einer Kennung seines Funkempfängers identifiziert wird oder aber auch, wenn das Gerät über eine Anschlussmöglichkeit an ein Funktelekommunikationsnetz verfügt, über dessen Netzkennung, identifiziert wird und über die Ortung aus dem Funkortungsverfahren seine Position und seine Bewegungsdaten festgestellt werden. Da heutzutage Nutzer in großer Zahl funkortungsgestützte Navigationsgeräte einsetzen, können entsprechende Daten in gleichfalls großer Menge und Streuung gewonnen werden, so dass diese statistisch ausgewertet werden können. Bei einem solchen Verfahren wird dann für jeden Nutzer, wenn dieser einen Parkplatz gefunden hat, ein Ereignis "Parkplatz gefunden" festgestellt. Die Kriterien hierfür können beispielsweise ein Stopp der Bewegung für eine eine festgelegte Toleranzzeit übersteigende Zeit und/oder ein Entfernen der Position des Navigationsgerätes außerhalb eines Straßenverlaufes sein. Die Festlegung einer Toleranzzeit, die ein Stopp der Bewegung übersteigen muss, ist sinnvoll, damit nicht jeder Halt an einer Verkehrsampel oder vor einem Hindernis als Ereignis "Parkplatz gefunden" gewertet wird. Entsprechend wird die Toleranzzeit so festzulegen sein, dass sie länger ist als typische Standzeiten vor Verkehrszeichen wie etwa Ampeln, Stoppschildern oder dgl. wie auch typische Haltezeiten vor Hindernissen auf der Fahrbahn, wie etwa auf der Fahrbahn parkenden Fahrzeugen, Verkehrsberuhigungspollern oder - inseln oder dgl. Ein Entfernen der Position des Navigationsgerätes außerhalb des Straßenverlaufes kann insbesondere dann ein Anzeichen für das Ereignis "Parkplatz gefunden" sein, wenn das Navigationsgerät ein mobiles ist, welches der Führer eines Kraftfahrzeuges beim Verlassen des Fahrzeuges mit sich führt, dieses dann entlang des Bürgersteiges in Richtung eines Gebäudes mitnimmt. Da der Kraftfahrzeugführer dann ersichtlich nicht mehr auf der Straße fährt, sondern sein Kraftfahrzeug abgestellt hat, indiziert ein solches Vorkommnis das Ereignis "Parkplatz gefunden". Denkbar sind auch noch andere Kriterien wie etwa eine typische Veränderung der Bewegungsgeschwindigkeit, die eintritt, wenn ein Fahrzeugführer sein Fahrzeug verlässt und sich zu Fuß weiter bewegt.

Wird ein solches Ereignis "Parkplatz gefunden" festgestellt, so wird gemäß dem möglichen Wahrscheinlichkeitsermittlungsverfahren der Wegabschnitt, in dem das Ereignis "Parkplatz gefunden" eingetreten ist, erfasst. Bei diesem Wegabschnitt handelt es sich um einen solchen, der zu dem Zeitpunkt, als der Führer des Kraftfahrzeuges diesen befahren hat, zumindest einen freien Parkplatz aufgewiesen hatte, nämlich denjenigen, den der Fahrzeugführer angesteuert hat. Ein solcher Wegabschnitt kann beispielsweise ein Straßenabschnitt zwischen zwei einmündenden Querstraßen sein. Es kommen aber auch andere Einteilungen solcher Wegabschnitte in Betracht, z.B. bei sehr langen Straßenabschnitten Unterteilungen anhand einer bestimmten Hausnummer eines anliegenden Gebäudes oder dgl. Schließlich wird nach dem erfindungsgemäßen Verfahren auch die Fahrzeit erfasst, die der Nutzer in jedem der von ihm durchfahrenen Wegabschnitte bis zum Eintreten des Ereignisses "Parkplatz gefunden" aufgewendet hat. Durchfährt ein Nutzer einen Wegabschnitt, in welchem er schließlich einen Parkplatz findet, mehr als einmal, so kann die Gesamtfahrzeit, die er beim mehrmaligen Durchfahren des Wegabschnittes aufgewendet hat, durch Addieren der einzelnen Fahrzeiten bestimmt und berücksichtigt werden.

Für das erfindungsgemäße Verfahren werden nun aus den für eine Vielzahl von Nutzern so gewonnenen Daten Wahrscheinlichkeiten ermittelt, innerhalb der bestimmten Zeitspanne einen Parkplatz in dem Wegabschnitt zu finden. So kann beispielsweise als vorbestimmte Zeitspanne eine Zeit von einer Minute angenommen werden, und es werden die Zahlen der Nutzer, die entlang dieses Wegabschnittes auf der Parkplatzsuche gefahren sind, ins Verhältnis gesetzt zu denjenigen, die innerhalb der vorgegebenen Zeitspanne von einer Minute Fahrzeit in diesem Wegabschnitt einen Parkplatz gefunden haben. Dieses Verhältnis stellt dann die Wahrscheinlichkeit dar. Bei der Berechnung können noch weitere Kriterien Einfluss nehmen, z.B. ist es möglich, diejenigen Wegabschnitte, die ein Parkplatz suchender Nutzer durchfahren, darin jedoch keinen Parkplatz gefunden hat, nur dann zu werten bzw. die darin verbrachte Fahrzeit anzurechnen, wenn diese innerhalb einer bestimmten Entfernung zum Fahrziel liegen, insbesondere näher als der Wegabschnitt, in dem der Nutzer schließlich einen Parkplatz finden konnte. Es lassen sich noch weitere Kriterien für eine verzweigtere und genaue Analyse und Bestimmung der Wahrscheinlichkeit finden. Entscheidend ist hier, dass ein solches Wahrscheinlichkeitsbestimmungsverfahren darauf aufbaut, dass Nutzer von funkortungsgestützten Navigationssystemen in ihrem Bewegungsprofil verfolgt werden können, dass entsprechende Daten über Parkplatzsuche mithin automatisch erfasst werden können, es hierzu insbesondere keiner aktiven Mithilfe der Nutzer des Navigationssystems bedarf. Das System ist dabei ein solches, welches durch fortwährende weitere Auswertung der Daten über die Zeit immer genauer wird, da die Anzahl der Stichproben in dem statischen Auswertungsverfahren ständig anwächst. Somit können über den Verlauf der Zeit immer genauere und zuverlässigere Aussagen über die Wahrscheinlichkeit, an einem vorgegebenen Wegabschnitt innerhalb einer bestimmten Zeitspanne einen Parkplatz zu finden, getroffen werden. Die vorgegebene Zeitspanne, zu der vorstehend als Beispiel eine Minute genannt worden ist, ist nicht auf diese Zeit festgelegt. Ebenso gut können kürzere Zeitspannen wie etwa eine halbe Minute, können aber auch längere Zeitspannen wie etwa zwei Minuten oder fünf Minuten gewählt werden. Hierbei kann es insbesondere auch in Betracht kommen, dass die vorgegebene Zeitspanne wählbar ist bzw. dass diese je nach "Parkplatzdruck" in einem Gebiet dynamisch angepasst werden kann. Sind in einem Gebiet Parkplätze vergleichsweise rar, kann die vorgegebene Zeitspanne höher angesetzt werden als in solchen Gebieten, in denen Parkplätze in größerer Zahl zur Verfügung stehen.

Bei diesem möglichen Verfahren zur Bestimmung der Wahrscheinlichkeit, einen Parkplatz zu finden können zusätzlich zu den oben genannten Daten noch der Wochentag und/oder die Tageszeit erfasst werden, an dem und/oder zu der das Ereignis "Parkplatz gefunden" eingetroffen ist. Denn häufig ist die Parkplatzsituation in einem Gebiet stark abhängig von der Tageszeit und auch vom Wochentag. In Wohngebieten, in denen ein großer Anteil von Pendlern leben, die also während der typischen Arbeitszeiten (z.B. Wochentags zwischen 8.00 und 18.00 Uhr) mit ihrem Auto unterwegs sind, lassen sich zu dieser Tageszeit häufig sehr viel leichter Parkplätze finden als des Abends, wenn die Anwohner von der Arbeitsstätte zurück sind und mit ihren Kraftfahrzeugen die vorhandenen Parkplätze belegen. Auch ist in solchen Gegenden die Parksituation stark unterschiedlich zwischen Werktagen und Wochenenden bzw. Feiertagen. In anderen Gegenden, z.B. in Innenstädten, mag sich die Parkplatzsituation gerade umgekehrt verhalten. Dort ist der Parkraum in Stoßzeiten der Arbeit- und Einkaufszeiten, häufig zwischen 10.00 und 18.00 Uhr besonders eng, wohingegen abends, insbesondere nach Geschäftsschluss, Parkplätze in größerer Zahl zur Verfügung stehen. Um diese zeitliche Dynamik bei der Ermittlung der Wahrscheinlichkeit, an einem vorgegebenen Wegabschnitt innerhalb einer bestimmten Zeitspanne einen Parkplatz zu finden, mit abbilden zu können, ist es also von Vorteil, diese Daten bei der Erfassung des Bewegungsprofils von Nutzern mit aufzunehmen. Dabei kann die Erfassung der Tageszeit und/oder des Wochentages zusammenfallend mit dem Ereignis "Parkplatz gefunden" vorgenommen werden, wie dies im Anspruch vorgeschlagen wird. Selbstverständlich kann - im Ergebnis gleichwertig - aber auch die Aufnahme insbesondere der Tageszeit mit dem Erkennen einer Parkplatzsuche verbunden werden, also in einem engen zeitlichen Zusammenhang mit dem Ereignis "Parkplatz gefunden" stehen, welches nicht das einzige, die Speicherung des Zeitpunktes auslösende Moment ist.

Von Vorteil ist es bei einem solchen Wahrscheinlichkeitsbestimmungsverfahren ferner, wenn die Auswertung des Bewegungsprofils des Nutzers in dem Gebiet nach den genannten Kriterien nur dann erfolgt, wenn der Nutzer als einen Parkplatz suchend erkannt wird. Nur dann, wenn feststeht, dass ein Nutzer tatsächlich einen Parkplatz sucht, kann die Aufnahme der genannten Daten die gewünschten Informationen liefern. Als Parkplatz suchend kann ein Nutzer dabei insbesondere dann erkannt werden, wenn er sich in dem Gebiet über eine oberhalb einer vorgegebene Mindestzeit liegende Zeitspanne mit einer eine Mindestgeschwindigkeit unterschreitenden Geschwindigkeit bewegt. Typisch für Parkplatz suchende Nutzer ist die langsame Fahrt entlang einer Suchstrecke, während der er versucht, freie Parkplätze am Wegesrand auszumachen. Recht häufig erfolgt die Fahrt dann lediglich in Schrittgeschwindigkeit. Um auch hier wiederum unterscheiden zu können zwischen dem langsamen Annähern an eine Kreuzung, an eine auf rot geschaltete Ampel oder dgl. und der Fahrt während einer Parkplatzsuche, empfiehlt sich die Vorgabe des Kriteriums einer Mindestzeit, für die die langsame Fahrt andauert. Auch hier wird eine solche Zeit gewählt werden, die gerade oberhalb einer Zeitspanne liegt, wie sie typisch ist für die Annäherung an Kreuzungen in langsamer Fahrt und dgl. Als weiteres oder alternatives Kriterium dafür, dass der Nutzer des Navigationsgerätes einen Parkplatz sucht, kann dienen, wenn erkannt wird, dass er wenigstens einen Wegabschnitt ein zweites Mal passiert. Denn häufig ist die Parkplatzsuche damit verbunden, dass Weg- bzw. Straßenabschnitte mehrfach durchfahren werden, in der Hoffnung, es sei dort in der Zwischenzeit ein Parkplatz frei geworden. Selbstverständlich können auch weitere Kriterien Anwendung finden, um die Feststellung zu treffen, dass der Nutzer sich auf der Suche nach einem Parkplatz befindet, und somit die Aufzeichnung und Auswertung des Bewegungsprofils gemäß dem anspruchsgemäßen Verfahren auszulösen.

Grundsätzlich kann für die Wahrscheinlichkeitsbestimmung aber auch eine andere Art der Vorgehensweise zugrunde gelegt sein als die oben beschriebene. Letztlich ist lediglich entscheidend, dass das Navigationsgerät bzw. Navigationssystem eine entsprechende Wahrscheinlichkeit kennt und zur Grundlage seiner Routenberechnung und Routenführung macht.

## Patentansprüche

1. Verfahren zum Leiten eines Nutzers eines funkortungsgestützten, insbesondere satellitenfunkortungsgestützten, Navigationsgerätes entlang einer Route zur Parkplatzsuche im Bereich eines Fahrziels, wobei in dem Navigationsgerät eine Endlosroute entlang eines Streckenplans um das Fahrziel herum berechnet und der Nutzer entlang dieser Route so lange geführt wird, bis er einen Parkplatz gefunden hat, wobei die Berechnung der Endlosroute und Zusammenstellung derselben aus Routenabschnitten anhand der Kriterien:
i) Entfernung des jeweiligen Routenabschnittes vom Fahrziel sowie
ii) Wahrscheinlichkeit, an dem jeweiligen Routenabschnitt innerhalb einer bestimmten Zeitspanne einen Parkplatz zu finden,
erfolgt, wobei bei der Berechnung der Endlosroute die nacheinander gesetzten Routenabschnitte der Endlosroute anhand der Relevanz der jeweiligen Kriterien i) und ii) gewichtet werden.

2. Verfahren nach Anspruch 1, **dadurch gekennzeichnet, dass** bei der Routenberechnung zunächst Routenabschnitte eingefügt werden, die in der Nähe zum Fahrziel liegen, anschließend weiter entfernte Routenabschnitte mit hoher Wahrscheinlichkeit innerhalb einer vorgegebenen Zeit dort einen Parkplatz zu finden.

## Claims

1. A method for guiding a user of a radiolocation-based, in particular a satellite radiolocation-based, navigation device along a route in order to search for a parking space in the region of a destination, whereas an endless route along a route map around the destination is calculated in the navigation device, and the user is guided along said route until the user has found a parking space, whereas the endless route is calculated and compiled from route portions using the following criteria:
i) the distance of the respective route portion from the destination as well as
ii) the probability of finding a parking space on the respective route portion within a specified time span,
whereas the successively set route portions of the endless route are selected in a weighted manner when calculating the endless route using the relevance of the appropriate criteria i) and ii).

2. A method according to claim 1, **characterised in that** the route portions are inserted first of all when calculating the route, portions situated in the vicinity of the destination, then more remote route portions so as to find a parking space with high probability within a specified time span.

## Revendications

1. Procédé de guidage d'un utilisateur d'un appareil de navigation assistée par radiolocalisation, en particulier assistée par radiolocalisation par satellite, le long d'un trajet de recherche d'une place de stationnement dans la zone d'une destination, dans lequel l'appareil de navigation calcule un itinéraire en boucle le long d'un plan routier autour de la destination et l'utilisateur est guidé le long de cet itinéraire jusqu'à ce qu'il trouve une place de stationnement, dans lequel le calcul de l'itinéraire en boucle et sa constitution s'effectuent à partir de segments d'itinéraire sur la base des critères suivants :
i) distance de chaque segment d'itinéraire par rapport à la destination de même que
ii) probabilité de trouver une place de stationnement dans un laps de temps donné sur le segment d'itinéraire concerné,
dans lequel lors du calcul de l'itinéraire en boucle, les segments de l'itinéraire en boucle placés à la suite les uns des autres sont en outre sélectionnés de manière pondérée en fonction de la pertinence des critères i) et ii) respectifs.

2. Procédé selon la revendication 1, **caractérisé en ce que** des sections d'itinéraire sont d'abord insérés lors du calcul de l'itinéraire, sections se trouvant à proximité de la destination, puis d'autres sections d'itinéraire éloignés, pour trouver une place de stationnement dans un laps de temps donné avec une forte probabilité.
